# EUROPÄISCHE PATENTSCHRIFT

(11) **EP 0 872 303 B1**
(45) Veröffentlichungstag und Bekanntmachung des Hinweises auf die Patenterteilung: **11.06.2003**
(21) Anmeldenummer: 98106567.5
(22) Anmeldetag: 09.04.1998
(51) Int. Cl.: B23K 26/06, C03B 33/03, C03B 33/09

(54) **Verfahren und Vorrichtung zum Durchtrennen von flachen Werkstücken aus sprödem Material, insbesondere aus Glas**
Process and apparatus for splitting flat pieces of brittle material, particularly of glass
Procédé et dispositif pour découper de pièces pleines en matériau fragiles, notamment en verre

(30) Priorität: 14.04.1997 DE 19715537; 12.08.1997 DE 19734823
(43) Veröffentlichungstag der Anmeldung: 21.10.1998
(73) Patentinhaber: Schott Glas, 55122 Mainz (DE); CARL-ZEISS-STIFTUNG trading as Schott Glas, 55122 Mainz (DE)
(72) Erfinder: Ostendarp, Heinrich, Dr., 55128 Mainz (DE); Stein, Jürgen, 55131 Mainz (DE); Hermanns, Christoph, Dr., 55130 Mainz (DE); Hauer, Dirk, 55218 Ingelheim (DE); Geissler, Heinz-Georg, 65510 Hünstetten (DE); Blunck, Andrew, 31073 Grünenplan (DE); Hoetzel, Bernd, 55286 Wörrstadt (DE); Steinfartz, Ralf, 55122 Mainz (DE)
(74) Vertreter: Fuchs Mehler Weiss & Fritzsche

(56) Entgegenhaltungen:
- EP-A- 0 176 872
- EP-A- 0 698 800
- WO-A-96/20062
- DE-A- 4 305 107
- DE-A- 4 411 037
- PATENT ABSTRACTS OF JAPAN vol. 96, no. 4, 30. April 1996 (1996-04-30) -& JP 07 328781 A (SOUEI TSUSHO KK;OTHERS: 02), 19. Dezember 1995 (1995-12-19)
- PATENT ABSTRACTS OF JAPAN vol. 009, no. 176 (M-398), 20. Juli 1985 (1985-07-20) -& JP 60 046892 A (TOSHIBA KK), 13. März 1985 (1985-03-13)

## Beschreibung

Die Erfindung betrifft ein Verfahren zum Durchtrennen von flachen Werkstücken aus sprödem Material, insbesondere aus Glas gemäß dem Oberbegriff des Patentanspruchs 1. Die Erfindung bezieht sich auch auf eine Vorrichtung gemäß dem Oberbegriff des Patentanspruchs 10.

Konventionelle Verfahren zum Schneiden von Flachglas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen. Nachteilig ist bei diesem Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen und somit einen erheblichen Nachbearbeitungsaufwand erfordern. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, um sowohl Splitter als auch Ausmuschelungen und Mikrorisse zu vermeiden, besteht im Trennen von Glas auf der Basis thermisch generierter Spannung. Hierbei wird eine Wärmequelle, die auf das Glas gerichtet ist, mit fester Geschwindigkeit über das Glas bewegt und so eine derart hohe thermische Spannung erzeugt, daß das Glas Risse bildet. Der notwendigen Eigenschaft der Wärmequelle, die thermische Energie lokal, d. h. mit einer Genauigkeit besser einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt.

Aus der DE-AS 1 244 346 ist ein Verfahren zum Ritzen von Glas bekannt, bei dem entlang der Schnittbahn eine Erwärmung des Glases mittels eines Laserstrahls erzeugt wird, wobei eine Temperatur unterhalb der Schmelztemperatur des Glases eingestellt wird. Im Anschluß an die Erwärmung wird das Glas gekühlt und durch Klopfen oder Biegen abgetrennt. Es kann auch eine Erwärmung über die Schmelztemperatur herbeigeführt werden, so daß ein feiner Spalt herausgeschmolzen wird.

Die GB-PS 1,433,563 beschreibt ein Verfahren, bei dem mit zwei Laserstrahlen gearbeitet wird, wobei ein Strahl mit niedrigerer Energie zum Vorwärmen eingesetzt wird.

In der DE 4 411 037 C2 wird ein Verfahren beschrieben, bei dem in ein Hohlglas mittels eines Laserstrahls eine umlaufende Spannungszone mit einer Temperatur von 250°C eingebracht wird. Nach dem Einbringen der Spannungszone wird mit einer Anrißspitze durch kurzzeitigen Kontakt mit der Oberfläche des Hohlglases mechanisch ein kurzer Startriß eingebracht, der im wesentlichen auf die Spur der maximalen Intensität des Laserstrahls und damit der höchsten Temperatur gesetzt wird. Die Spannungszone wird mittels eines flüssigkeitsgetränkten Vlieses gekühlt, wodurch der Thermoschock und damit die Spannungen so erhöht werden, daß sich der Startriß zu einem Trennriß ausbildet.

Die US 5,237,150, beschreibt ein Schneidverfahren für dicke Stahlplatten, das einen Laserstrahl im Ringmodus benutzt, um die Fokussierlinse zu schonen. Beim Auftreffen auf die Linse ist der Laserstrahl ringförmig, so daß sich die Energie des Laserstrahls über eine größere Fläche der Linse verteilt als bei einem punktförmigen Auftreffen. Dadurch wird eine lokale Überhitzung des Linsenmaterials vermieden. Auf dem Werkstück selbst wird der Strahl jedoch mittels der Fokussierlinse zu einem Punkt fokussiert. In diesem Punkt-Fleck ist keine erhöhte Intensität im Randbereich wie bei einem ringförmigen Fleck vorhanden, da der ringförmige Strahl zu einem "Punkt" geworden ist, der als "schneidender Punkt" den Stahl längs der Trennlinie aufschneidet.

Bei dem Verfahren nach der EP 0 062 484, wird ebenfalls ein Laserstrahl im Ringmodus TEMₒ benutzt, der punktförmig auf das Werkstück fokussiert wird. Wenn der Laserstrahl aber punktförmig fokussiert wird, werden die Intensitätsmaxima zu einem Punkt verschmelzen.
Dadurch, daß der Laserstahl auf der Oberfläche des Werkstückes fokussiert wird, verdampft das Glas bis zu einer bestimmten Tiefe. Das restliche Glas im Trennbereich wird über den Schmelzpunkt hinaus erhitzt. Mittels eines Gases wird das verdampfte Glasmaterial entfernt.

Die DE-OS 43 05 107 betrifft ein Verfahren und eine Vorrichtung zum Schneiden von Glas mit Laserstahlung, wobei der Laserstrahl in zwei parallele Strahlen geteilt wird, mit denen das Glas symmetrisch zur Trennlinie beaufschlagt wird. Mit einer solchen Anordnung kann kein exakter Schritt (± 0,1 mm) erzeugt werden, sondern der Riß pendelt zwischen den beiden Strahllinien.

Das aus der WO 93/20015 bekannte Verfahren nutzt einen Laserstrahl mit elliptischer Form. Dieses Verfahren zeigt gute Ergebnisse beim gradlinigen Ritzen von nichtmetallischem Plattenmaterial, kann jedoch kein hochwertiges und hochpräzises Ritzen entlang einer gekrümmten Kontur sichern. Zudem weist das genannte Verfahren eine geringe Stabilität des Schneidablaufs bei einer hohen Strahlungsdichte und hohen Schnittgeschwindigkeiten auf. Dies hängt damit zusammen, daß die Erhitzung mit einem Laserbündel mit elliptischem Querschnitt und der Gaußschen Verteilung der Strahlungsdichte in einem sehr engen Bereich erfolgt, wobei sich die Temperatur von der Peripherie zum Zentrum gravierend erhöht. Es ist extrem kompliziert, ein stabiles Thermospalten bei hoher Geschwindigkeit, hoher Ritztiefe und dennoch auch eine stabile Leistungsdichte zu erzielen, wenn die Erhitzung des Werkstoffes häufig mit dessen Überhitzung im zentralen Bereich des Bestrahlungsbereiches einhergeht, d. h. die Aufweichtemperatur des Materials überschritten wird, obwohl dies bei hochwertigem Schneiden unzulässig ist.

Die WO 96/20062 als nächstkommender Stand der Technik beschreibt ein Verfahren zum Durchtrennen von flachen Werkstücken aus sprödem Material, insbesondere aus Glas, längs einer vorgegebenen Trennlinie mit einem zu ihr symmetrischen Wärmestrahlungsfleck, der eine erhöhte Strahlungsintensität in seinem Randbereich mit einem Temperaturmaximum an seinem hinteren Ende besitzt, wobei der Wärmestrahlungsfleck längs der Trennlinie und/oder das Werkstück bewegt wird, und bei dem der erwärmte Trennlinienabschnitt anschließend gekühlt wird. Diese Merkmale bilden den Oberbegriff des Anspruchs 1.

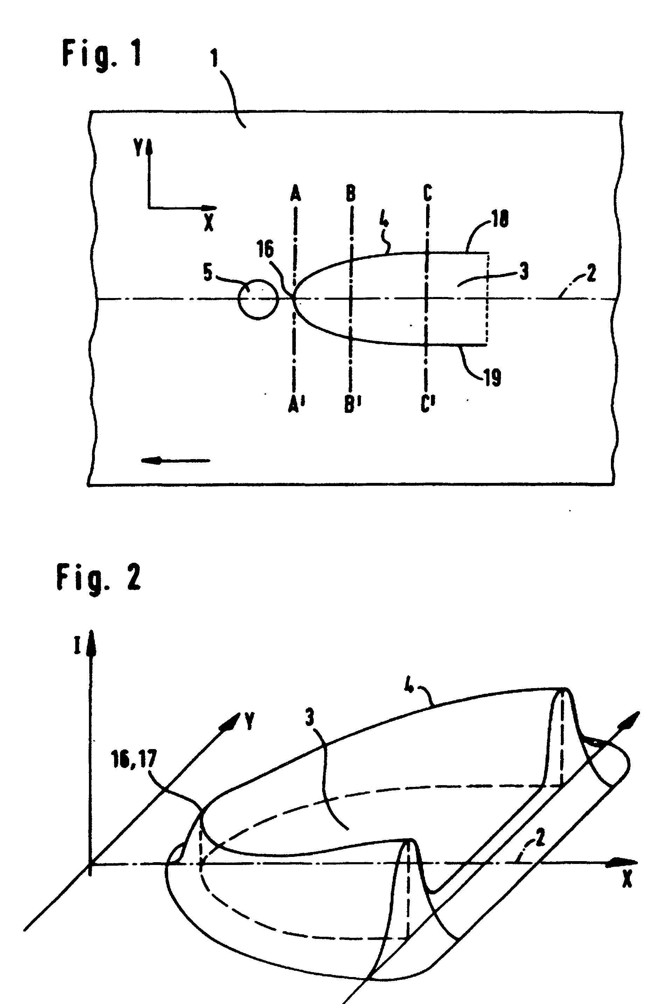

Im bekannten Fall ist ein ovaler oder elliptischer Wärmestrahlungsfleck vorgesehen, mit einem Strahlungsintensitätsminimum innerhalb des Ovals. Ein solcher "Schneidfleck" schneidet die Trennlinie zweimal, nämlich am vorderen und am hinteren Ende des Ovals. Dadurch ergibt sich mit Nachteil eine ungünstige Temperaturverteilung, die in Figur 1 der WO-Schrift dargestellt. ist. Durch den vorlaufenden Schnittpunkt findet bereits im vorderen Bereich des elliptischen Schneidflecks in Schneidrichtung gesehen im Bereich der Trennlinie eine unnötige Aufheizung statt.

Hierdurch entsteht in der Mitte des Schneidfleckes, d.h. auf der Trennlinie, eine unnötig große Aufheizung, so daß am Ende des Brennfleckes, wo die Strahlungsintensität wiederum im Bereich der Trennlinie sehr groß wird und die Temperatur ein Maximum erreicht, das Glas unter Umständen schon aufschmelzen kann.

Mit diesem Verfahren können ferner nur Gläser mit einer Stärke bis typischerweise 0,2 Millimeter durchtrennt werden, weil bei höheren notwendigen Strahlleistungen ansonsten ein Aufschmilzen stattfindet und der Riß unterbricht. Bei größeren Glasdicken findet nur ein Ritzen des Glases statt.

Aufgabe der vorliegenden Erfindung ist es, ein Verfahren und eine Vorrichtung bereitzustellen, mit dem flache Werkstücke, insbesondere mit größerer Dicke, z. R Glasscheiben mit einer Dicke größer 0,2 Millimeter, durchtrennt werden können, ohne daß Mikrorisse, Ausmuschelungen oder Splitter auftreten. Weiter soll bei dicken Gläsern eine Ritztiefe erzielt werden, die größer als die mit anderen Verfahren erzielbare Ritztiefe ist.

Diese Aufgabe wird mit einem Verfahren gemäß dem Patentanspruch 1 gelöst.

Durch die Maßnahmen nach Anspruch 1 wird erst zum Ende der Wärmebehandlung auf der Trennlinie Energie eingebracht und damit dort eine hohe Temperatur im Werkstück erreicht. Es wird dadurch eine hohe mechanische Spannung mit einem lokalen Temperaturmaximum auf der Trennlinie erzeugt. Bei nachfolgender Kühlung auf der Trennlinie und vorheriger Schwächung des Glases am Startpunkt des Schnittes reißt das Glas entlang des Vorschubes auf der Trennlinie. Wegen des starken lokalen Temperaturmaximums auf der Trennlinie folgt der Schnitt sehr präzise der Trennlinie, was beispielsweise bei Präzisionsschnitten in der Displayindustrie notwendig ist.

Ein weiterer Vorteil des erfindungsgemäßen Verfahrens besteht darin, daß ein mechanisches Brechen nach der Wärme- und Kühlbehandlung nicht notwendig ist, so daß saubere Trennkanten erzielt werden.

Bei dem erfindungsgemäß geformten Wärmestrahlungsfleck mit der V- oder U-förmigen Kontur liegen die Bereiche des Wärmestrahlungsflecks mit erhöhter Strahlungsintensität daher auf einer V- oder U-förmigen Kurve, die sich in Schneidrichtung öffnet. Die beiden Schenkel der V- bzw. U-förmigen Kurve liegen gleich beabstandet benachbart der Trennlinie, so daß bei einer derartigen Gestalt des Wärmestrahlungsflecks die Werkstückoberfläche durch die beiden beabstandeten Intensitätsmaxima zunächst auf einer großen Breite, die bis zu einigen Millimetern betragen kann, aufgeheizt wird, wobei zwischen beiden Intensitätsmaxima zunächst ein lokales Temperaturminimum besteht. Durch das Zusammenlaufen der Schenkel der V- bzw. U-förmigen Kurve am hinteren Ende des Wärmestrahlungsflecks in den Scheitelpunkt wird das lokale Temperaturminimum zunehmend verringert, d.h. die Temperatur im Bereich der Trennlinie nimmt zum Ende des Wärmestrahlungsflecks hin zu und erreicht dort ein lokales Temperaturmaximum, insbesondere an der Werkstückoberfläche, das aber noch unterhalb der Schmelztemperatur des Werkstücks liegt. Ein derartiger Wärmestrahlungsfleck bewirkt, daß im Bereich des Abstandes der Intensitätsmaxima eine homogene Aufheizung des Werkstückes auf großer Breite und auch in der Tiefe auf eine Temperatur unterhalb der Schmelztemperatur erreicht wird, was bei einem Strahl mit einer maximalen Intensität im Zentrum, insbesondere am Anfang des Wärmestrahlungsflecks, nicht der Fall ist. Der so erzeugten Aufheizspur folgt eine unmittelbare Kühlung mittels einer Flüssigkeit, eines Gases oder eines unterkühlten mechanischen Tastkopfes, die auf der Trennlinie die größte Intensität hat. Diese Kühlung bewirkt eine Kontraktion des Materials. Durch die Aufheizung auf großer Breite mit einem Temperaturmaximum auf der Trennlinie wird in Kombination mit der Kühlung, die ebenfalls auf der Trennlinie ihre größte Wirkung zeigt, eine vergleichsweise hohe mechanische Spannung mit einem starken lokalen Maximum auf der Trennlinie erzeugt. Dadurch ist es möglich, auch große Werkstückdicken sauber zu durchtrennen. In Versuchen konnte gezeigt werden, daß Glasscheiben mit einer Dicke bis zu 1,1 mm stabil durchtrennt werden können.

Die Breite des V- oder U-förmigen Wärmestrahlungsflecks liegt vorzugsweise bei 0,5 bis 2 mm. Die Länge des Wärmestrahlungsflecks kann 10 bis 30 mm betragen. Bei der Einstellung dieser Werte sind im Hinblick auf eine homogene Erwärmung in der Tiefe des Werkstücks u.a. die Vorschubgeschwindigkeit. Werkstücksdicke, Strahlungsintensität und die Materialeigenschaften zu berücksichtigen.

Gemäß einer besonderen Ausführungsform wird der Wärmestrahlungsfleck durch Scannen eines Laserstrahls erzeugt.

Vorzugsweise wird das Scannen in Form einer Ellipse durchgeführt, wobei der Laser zur Erzeugung einer V- oder U-förmigen Kurve abwechselnd ein- und ausgeschaltet oder der Strahl ein- und ausgeblendet wird.

Hinsichtlich der Vorrichtung zum Durchtrennen von flachen Werkstücken aus sprödem Material, insbesondere aus Glas, längs einer vorgegebenen Trennlinie,
- mit einer optischen Einrichtung, die eine Wärmestrahlungsquelle, insbesondere einen Laser, und mindestens eine optische Komponente umfaßt zur Erzeugung eines zur Trennlinie symmetrischen Wärmestrahlungsfleckes, der eine erhöhte Strahlungsintensität in seinem Randbereich mit einem Temperaturmaximum an seinem hinteren Ende besitzt,
- mit einer Einrichtung zum Bewegen des zu durchtrennenden Werkstücks und/oder des Wärmestrahlungsflecks längs der Trennlinie, und
- mit einer Kühleinrichtung zum Kühlen des bestrahlten Trennlinienabschnitts,
erfolgt die Lösung vorgenannter Aufgabe dadurch, daß die optische Einrichtung und/oder die Wärmestrahlungsquelle zur Erzeugung eines Wärmestrahlungsflecks ausgebildet ist, dessen Randbereich mit erhöhter Strahlungsintensität auf einer V- oder U-förmigen Kurve liegt, die sich zum vorderen Ende des Wärmestrahlungsflecks öffnet, und bei dem das Temperaturmaximum örtlich im Scheitelpunkt der V- oder U-förmigen Kurve auf der Trennlinie unterhalb der Schmelztemperatur des Werkstückmaterials liegt.

Gemäß einer ersten Ausführungsform kann eine Scannereinrichtung verwendet werden. Dementsprechend weist die optische Einrichtung zwei senkrecht zueinander angeordnete, oszillierende, synchronisierte Spiegel auf, die einen Laserstrahl auf die Oberfläche des Werkstücks derart lenken, wo er dort eine V- oder U-förmige Kurve beschreibt.

Um die Synchronisation der beiden Spiegel zu realisieren, sind die Antriebseinrichtungen der beiden oszillierenden Spiegel an eine gemeinsame Steuer- und Regeleinrichtung angeschlossen. Vorzugsweise liegt die Oszillationsfrequenz der beiden Spiegel bei 500 bis 2000 Hz, so daß eine Schneidgeschwindigkeit von 50 mm/sec bis 1000 mm/sec erreicht werden kann, was von der eingesetzten Strahlungsintensität abhängt.

Gemäß einer weiteren Ausführungsform einer Scannereinrichtung weist die optische Einrichtung ein Spiegelrad auf, dessen Oberfläche derart gekrümmt ist, daß ein darauf reflektierter Laserstrahl während einer Rotation des Spiegelrades mindestens einmal eine U- oder V-förmige Kurve auf der Oberfläche des zu duchtrennenden Werkstückes beschreibt.

Die Rotationsfrequenz des Spiegelrades liegt bei 500 bis 3000 Hz, so daß die genannten Vorschubgeschwindigkeiten erreicht werden können.

Vorzugsweise wird ein Laser mit einer Wellenlänge eingesetzt, die in dem Material eine große Absorption erfährt. Beispielsweise wird für Glas ein CO₂-Laser verwendet, der mit einer Wellenlänge von 10,6 µm ausgestattet ist und kommerziell günstig zu erhalten ist. Die maximale Ausgangsleistung des Lasers beträgt typischerweise 150 Watt.

Die Intensität des Lasers ist vorzugsweise während jedes Durchlaufs der V-oder U-förmigen Kurve veränderbar, so daß im Bereich des Scheitelpunktes der V- oder U-förmigen Kurve die Strahlungsintensität variiert werden kann. Die Strahlungsintensität wird vorzugsweise so eingestellt, daß die Schmelztemperatur des Werkstücks nicht überschritten wird.

Eine Steuerung der Scannerbewegung, die den Scanner bei Kreisschnitten und Freiformschnitten so steuert, daß eine der Kurvenbahn angepaßte, gekrümmte V- oder U-förmige Intensitätsverteilung entsteht, ist ebenfalls möglich, wie später noch anhand der Figurenbeschreibung erläutert werden wird.

Anstelle dieser Scannereinrichtungen kann die gewünschte Form des Wärmestrahlungsflecks auch durch strahlformende Optiken erreicht werden.

Eine weitere Möglichkeit besteht darin, eine Wärmestrahlungsquelle in Form eines Lasers mit einem TEM 01*-Mode zu verwenden, wobei die optische Einrichtung eine entsprechende Blende umfaßt, die einen Teil des Strahls derart ausblendet, daß die erhöhte Strahlungsintensität im Bereich der Werkstückoberfläche auf einer V- oder U-förmigen Kurve liegt. Ein TEM 01*-Mode wird erzeugt durch einen speziellen Resonatoraufbau eines CO₂-Lasers.

Bezüglich der Kühleinrichtung kann beispielsweise ein unterkühlter metallischer Tastkopf verwendet werden. Ferner besteht die Möglichkeit, als Kühleinrichtung eine Gasstrahleinrichtung, eine Flüssigkeitsinjektionseinrichtung oder eine Flüssigkeitszerstäubungseinrichtung zu verwenden.

Beispielhafte Ausführungsformen der Erfindung werden nachfolgend anhand der Zeichnungen näher erläutert.

Es zeigen:
- Fig. 1: die Draufsicht auf einen Ausschnitt auf ein zu durchtrennendes Werkstück,
- Fig. 2: eine dreidimensionale Darstellung des Intensitätsverlaufs eines Wärmestrahlungsflecks,
- Fig. 3: Schnitte durch das Intensitätsprofil bzw. Temperaturprofil durch den in Fig. 1 gezeigten Wärmestrahlungsfleck längs der Linien A-A', B-B' und C-C',
- Fig. 4: eine graphische Darstellung des Temperaturverlaufs längs der Trennlinie,
- Fig. 5: eine perspektivische Darstellung einer optischen und einer Kühleinrichtung,
- Fig. 6: eine perspektivische Darstellung einer weiteren Ausführungsform der erfindungsgemäßen Vorrichtung,
- Fig.7a-c: Darstellungen einer weiteren Ausführungsform der erfindungsgemäßen Vorrichtung mit Intensitätsprofilen,
- Fig.. 8 A-C: einen V-förmigen Wärmestrahlungsfleck mit verlängerten Schenkeln über den Scheitelpunkt hinaus, sowie die zugehörige Temperaturverteilung,
- Fig. 9: eine schematische Blockschaltbild-Darstellung für die Gesamtanordnung der erfindungsgemäßen Vorrichtuung einschließlich der zugehörigen Steuerungen, die auch Freiformschnitte mit gekrümmten Wärmestrahlungsflecken ermöglicht,
- Fig. 10: ein zweidimensional durch Scannen entlang der Schneidlinie, benachbart zu dieser geführtes Wärmestrahlungsbündel mit einem U- oder V-förmig langgestreckten, entsprechend der Krümmung der Schneidlinie, diese einhüllend, gekrümmten Wärmestrahlungsfleck, der durch eine umlaufende Scannerbewegung erzeugt wird, und
- Fig. 11: ein Wärmestrahlungsfleck entsprechend Fig. 10, der jedoch durch eine reversierende Scannerbewegung erzeugt wird.

In der Fig. 1 ist die Draufsicht auf eine Glasscheibe 1 dargestellt, die längs der Linie 2 (Trennlinie) durchtrennt werden soll. Auf die Oberfläche der Glasscheibe 1, die in Pfeilrichtung (Vorschubrichtung) bewegt wird, wird ein Wärmestrahlungsfleck 3 gerichtet, der eine U-förmige Kontur aufweist. Die Bereiche erhöhter Strahlungsintensität sind durch die U-förmige Kurve 4 gekennzeichnet, die sich in Vorschubrichtung öffnet. Die Gestalt des Wärmestrahlungsflecks entspricht in etwa einer halben Ellipse, deren breitester Bereich das vordere Ende des Wärmestrahlungsflecks 3 bildet.

Die beiden Schenkel 18, 19 der U-förmigen Kurve 4 liegen beabstandet und symmetrisch zur Trennlinie 2. Der Abstand der Schenkel 18, 19 beträgt im vorderen Bereich des Wärmestrahlungsflecks 3 etwa 1 mm. Der Abstand der beiden Schenkel 18, 19 verringert sich zum Scheitelpunkt 16, der auf der Trennlinie 2 liegt.

In der Fig. 2 ist die Intensitätsverteilung des Wärmestrahlungsflecks 3 dreidimensional dargestellt. Es ist zu sehen, daß die Kammlinie der Intensitätsmaxima zum Scheitelpunkt 16 abfällt, wo sich das lokale Maximum 17 bezüglich der Trennlinie 2 befindet. Im Inneren des Wärmestrahlungsflecks ist die Intensität deutlich geringer. Die Höhe des lokalen Maximums 17 muß entsprechend der Werkstückdicke und der Schneidgeschwindigkeit eingestellt werden. Bei hoher Schneid- oder Vorschubgeschwindigkeit muß das lokale Maximum 17 höher sein als bei einer geringeren Vorschubgeschwindigkeit. Hierbei muß das lokale Maximum 17 auch auf die Höhe der Strahlungsintensität im vorderen Bereich der Kurve 4 abgestimmt werden.

Das lokale Maximum bezüglich der Trennlinie muß nicht gleichzeitig das Minimum der Kurve 4 bilden. Wenn beispielsweise ein Laser ohne Leistungssteuerung verwendet wird, kann im Scheitelpunkt 16 die Intensität eine leichte Überhöhung aufweisen.

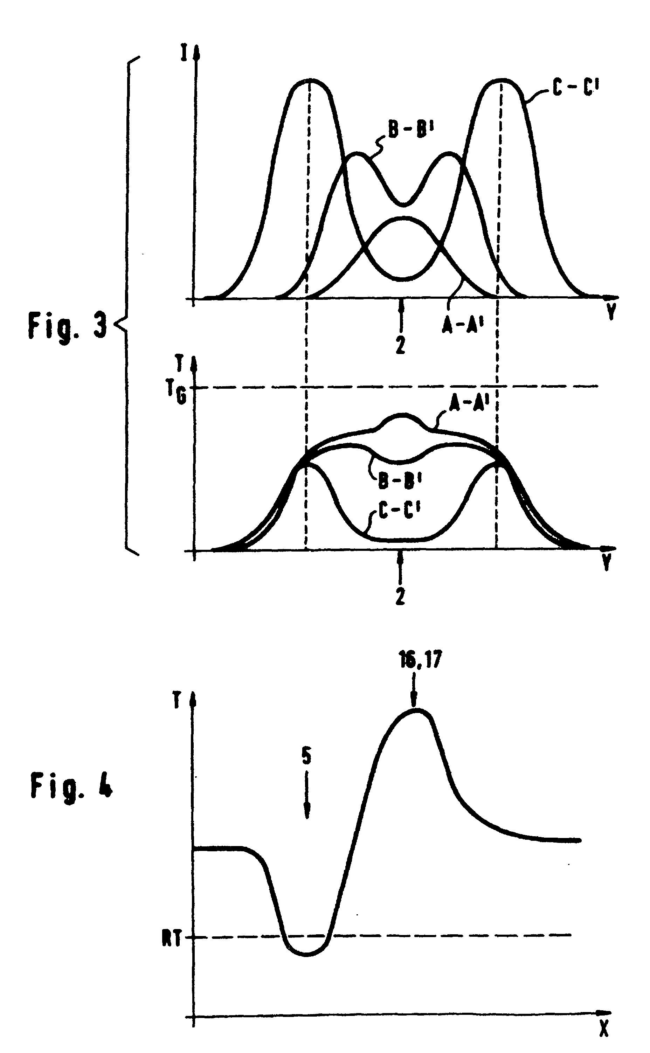

In der Fig. 3 sind drei Schnitte durch das Intensitätsprofil längs der Linie A-A', B-B' und C-C' (siehe Fig. 1) dargestellt. Man sieht, daß der Kurvenverlauf, der durch den Schnitt C-C' gekennzeichnet ist, zwei beabstandete Maxima aufweist, die deutlich höher sind, als die beiden beabstandeten Maxima beim Schnitt B-B'. Im Scheitelpunkt 16, der durch den Schnitt A-A' gekennzeichnet ist, ist das Intensitätsmaximum noch einmal deutlich niedriger. Dadurch, daß durch die beiden Maxima eine Vorerwärmung in einem breiten Bereich um die Trennlinie eine Art Vorerwärmung stattgefunden hat, zeigt das Temperaturprofil bezüglich des Schnittes B-B' im Bereich der Trennlinie nur ein geringes lokales Minimum. Dieses Minimum wird durch die relativ geringe Intensität im Scheitelpunkt ausgeglichen, so daß sich im Scheitelpunkt 16 ein Temperaturverlauf mit einem Maximum im Bereich der Trennlinie 2 zeigt. Dieses Maximum liegt noch unterhalb der Glastemperatur Tg.

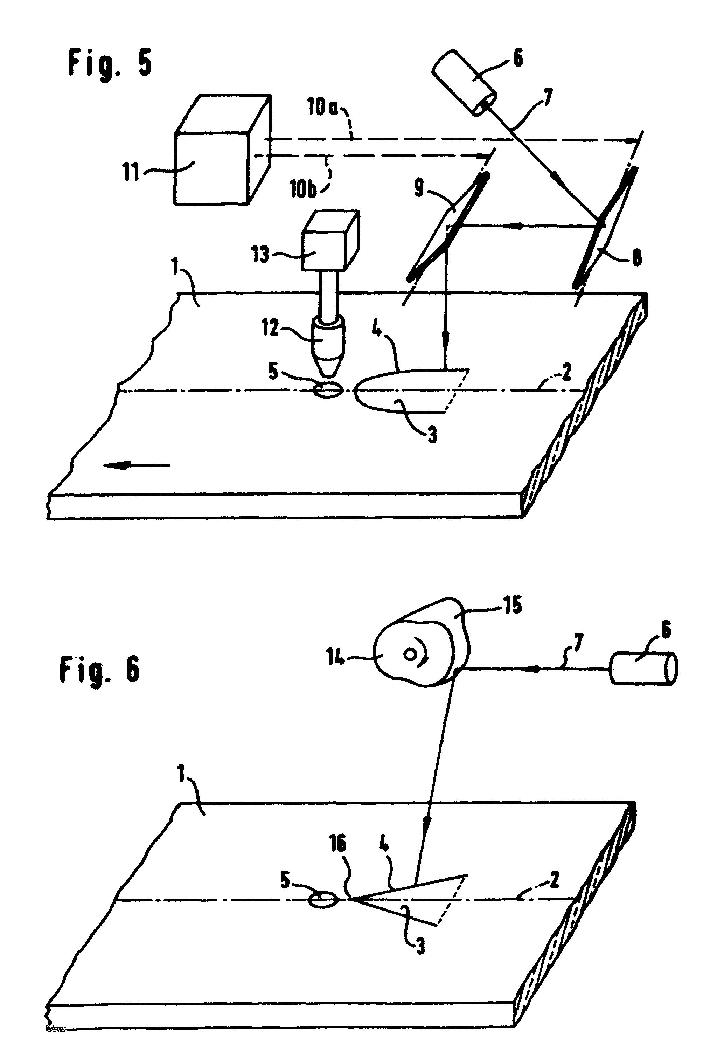

In der Fig. 4 ist der Temperaturverlauf längs der Trennlinie unter Einbeziehung des Kühlflecks 5 dargestellt.

In der Fig. 5 ist die Vorrichtung zur Erzeugung eines Wärmestrahlungsfleckes 3 auf einer Glasplatte 1 dargestellt. Auf der Oberfläche der Glasplatte 1 ist die Trennlinie 2 sowie die U-förmige Kurve erhöhter Intensität 4 dargestellt. Als Wärmestrahlungsquelle ist ein Laser 6 vorgesehen, insbesondere ein CO₂-Laser, der einen Laserstrahl 7 aussendet. Dieser Laserstrahl 7 trifft auf einen ersten um eine vertikale Achse oszillierenden Spiegel 8, der den Strahl 7 in einer Ebene parallel zur Oberfläche der Glasscheibe 1 hin und her bewegt. Dieser oszillierende Laserstrahl trifft auf einen zweiten um eine horizontale Achse oszillierenden Spiegel 9, der den reflektierten Laserstrahl in X-Richtung hin und her bewegt. Die Anordnung der Spiegel 8 und 9 kann auch vertauscht sein. Aufgrund der Überlagerung der beiden oszillierenden Bewegungen beschreibt der Laserstrahl auf der Werkstückoberfläche die gewünschte U-förmige Kurve 4. Um die Oszillationen der beiden Spiegel 8 und 9 so aufeinander abzustimmen, daß diese U-förmige Kurve 4 erzielt wird, ist eine gemeinsame Steuer- und Regeleinrichtung 11 vorgesehen, die an die nicht dargestellten Antriebe der beiden Spiegel 8, 9 über die Steuerleitungen 10a,10b angeschlossen ist.

Die Spiegel 8 und 9 können auch so angesteuert sein, daß der Laserstrahl auf dem Werkstück eine geschlossene Kurve durchlaufen würde. Um eine U- oder V-förmige Kurve zu erhalten, wird der Laser entsprechend ein- oder ausgeschaltet.

Hinter dem Wärmestrahlungsfleck 3 ist der Kühlfleck 5 eingezeichnet, der durch das aus einer Sprühdüse 12 austretende Kühlgas erzeugt wird. Diese Sprühdüse ist an eine Versorgungseinheit 13 angeschlossen.

In der Fig. 6 ist ein Werkstück 1 dargestellt, auf dessen Oberfläche ein Wärmestrahlungsfleck 3 mit dreieckförmiger Gestalt gerichtet wird. Die Bereiche erhöhter Intensität sind durch die V-förmige Kurve 4 gekennzeichnet. Auch diese V-förmige Kurve 4 ist symmetrisch zur Trennlinie 2 angeordnet, so daß der Scheitelpunkt 16 auf der Trennlinie 2 liegt. Um eine derartige V-förmige Kurve 4 einzustellen, ist ein Laser 6 vorgesehen, der einen Laserstrahl 7 aussendet, der auf ein Spiegelrad 14 trifft. Die Oberfläche des Spiegelrades 14 ist nicht zylindrisch, sondern gekrümmt ausgebildet, so daß während einer Rotation des Spiegelrades 14 auf der Werkstückoberfläche mindestens einmal die V-förmige Kurve 4 durchlaufen wird.

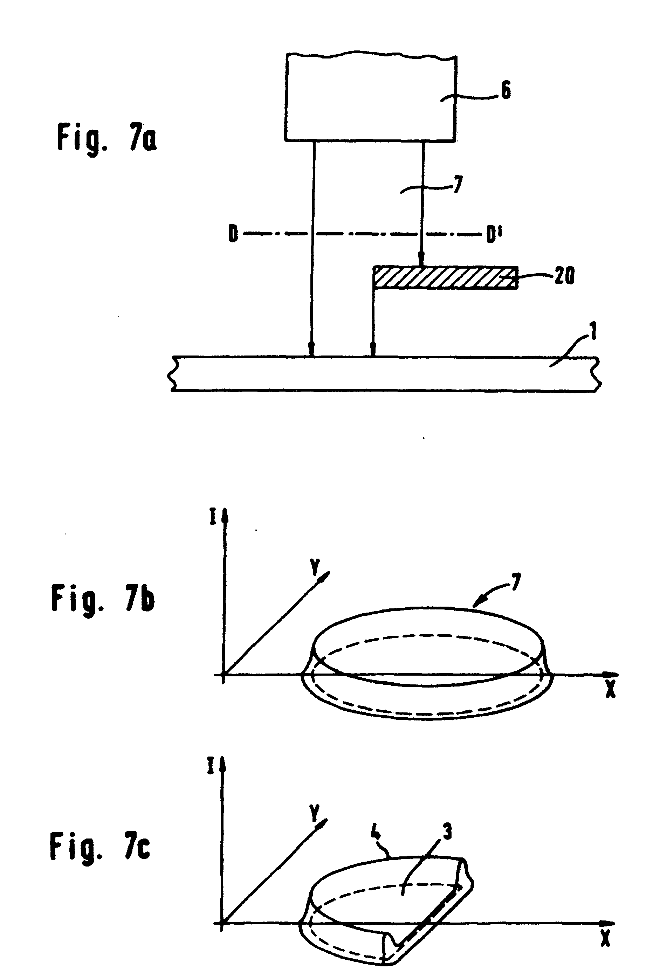

In der Fig. 7a ist eine Anordnung skizziert, bei der ein Laser 6 verwendet wird, der einen Laserstrahl 7 mit TEM 01*-Mode erzeugt. Zwischen Laserstrahl 6 und Werkstück 1 ist eine Blende 20 angeordnet, die die Hälfte des Strahls 7 ausblendet. Die entsprechenden Intensitätsprofile vor und hinter der Blende sind in den Fign. 7b und 7c dargestellt.

Das Verfahren erwies sich wegen der großen. erzielbaren mechanischen Spannung geeignet, Glas bis zu einer Dicke von 1,1 mm vollständig zu trennen, was mit den Verfahren gemäß dem Standes der Technik bislang nicht nachgewiesen werden konnte. Bei typischen Vorschubgeschwindigkeiten von 50 mm/sec bis 500 mm/sec betrugen die Leistungen des verwendeten CO₂-Laserstrahls zwischen 12 Watt und 80 Watt. Der Wärmestrahlungsfleck hatte eine Länge von typischerweise 12 mm in Vorschubrichtung bei 1 mm Breite. Die Schnittkanten wiesen keine Mikrorisse, Ausmuschelungen und Splitter auf. Bei dickeren Gläsern oberhalb 0,7 mm Dicke trat ein nahezu senkrechter Tiefenriß bis hin zu einer Tiefe von einigen hundert Mikrometern auf, was mit obigen anderen Verfahren ebenfalls nicht erzielt werden konnte.

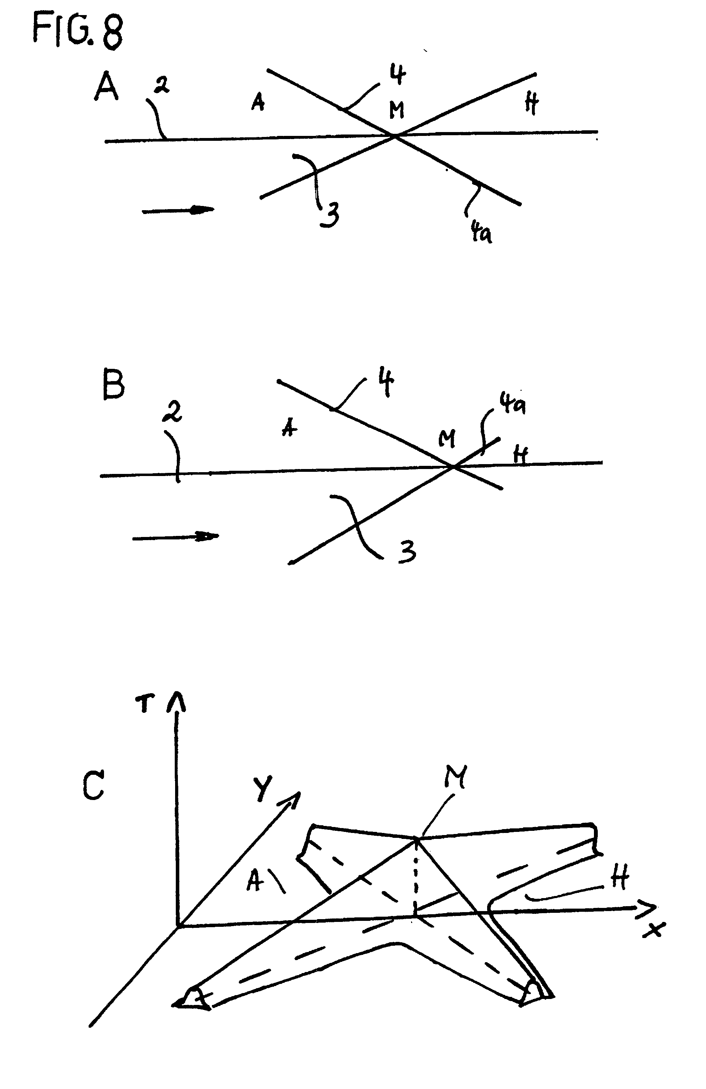

Die Bezeichnung V- bzw. U-förmig soll nicht buchstabengetreu verstanden werden. Es können daher auch ähnliche Kurven, wie z.B. eine Parabel, verwendet werden. Auch müssen bei einem V-förmigen Fleck 3 gemäß Fig. 6 die Schenkel 4 nicht zwingend im Scheitelpunkt enden. Sie können, wie in Fig. 8 dargestellt, auch über den Scheitelpunkt hinaus verlängerte Schenkel 4 a besitzen, wobei in der Teilfigur 8 A die V-Schenkel 4 und deren Verlängerungen 4 a gleich lang sind und damit einen quasi X-förmigen Fleck bilden, und wobei in der Teilfigur 8 B die verlängerten Schenkel 4 a kürzer als die eigentlichen V-Schenkel sind.

Welche der beiden Varianten A oder B eingesetzt wird, hängt von den materialspezifischen Kenngrößen des Glases ab.

Dies sind typischerweise die thermodynamischen Kenngrößen (Wärmeleitfähigkeit), die Glasdicke und die optischen Eigenschaften (Absorption der Laserstrahlung). Qualitativ lassen sich dabei kurz gesagt folgende Aussagen treffen:
- Wärmeleitfähigkeit hoch: Schenkellänge kurz, Wärme dringt schnell in das Glas ein.
- Dicke hoch: Schenkellänge lang, Wärme benötigt Zeit, um in Glas einzudiffundieren.
- Absorption: Schenkellänge lang. Wärme benötigt Zeit, um in das Glas einzudiffunieren.

Prinzipiell könnte der Fleck nach Fig. 8 B auch seitenvertauscht verlaufen (kürzere Schenkel links).

Mit dieser Strahlgeometrie würde das Glas zu schnell aufgeheizt, d.h. der lokale Temperaturgradient wäre sehr hoch, was zu einer Schädigung des Glases führen kann. Da die Wärme "keine Zeit" hat, in das Glas einzudringen, würde die Glasumwandlungstemperatur Tg kurzfristig überschritten. Die Folge wäre entweder ein unkontrollierter Bruch oder ein Abplatzen von Oberflächenpartikel.

Der Laserstrahl-Fleck nach Fig. 8 A - und analog der Fleck nach Fig. 8 B - haben vorzugsweise ein Intensitäts- und Temperaturprofil gemäß der Darstellung in Fig. 8 C mit einem Temperatur-Maximum im Punkt M.

Die Intensität des Laserstrahls hat dabei prinzipiell eine örtlich und zeitlich konstante Gaußform. Bewegt man sich auf dem Glas in Richtung des Kreuzpunktes der beiden Laserstrahlen von Punkt A zu H, ergibt sich folgender Temperaturverlauf:
- Punkt A:: Das Glas hat Umgebungstemperatur
- Punkt M:: Zwischen A und M wird sich das Glas kontinuierlich aufheizen und in M sein Maximum erreichen. Die Temperatur liegt unterhalb der Umwandlungstemperatur Tg.
- Punkt H:: Zwischen M und H wird die Temperatur "gehalten" bzw. senkt sich leicht ab. In dieser Phase geht die Wärme von der Oberfläche etwas in das Glasinnere. Durch die gezielte Abflachung des Temperaturgradienten in Schnittrichtung bzw. senkrecht dazu läßt sich die Schnittqualität deutlich verbessern.

Die Schenkel 4 und 4 a in den Figuren 8 A und 8 B, sind, wie dargestellt, bevorzugt linear. Sie können jedoch auch prinzipiell leicht gekrümmt sein.

Beim Trennen von Flachglas mittels eines Laserstrahles ist die Breite des Wärmestrahlungsflecks typischerweise bedeutend geringer als dessen Länge. Wesentlich für einen akzeptablen Schnitt ist dabei, wie dargelegt, daß bezogen auf die Glasoberfläche die in der Schneidzone befindlichen Oberflächenpunkte einen bestimmten zeitlichen Verlauf der Aufheizung und Abkühlung erfahren müssen. Dies hat zur Konsequenz, daß bei einer Vergrößerung der Schneidgeschwindigkeit zwar die Breite des Strahlungsbündels unverändert bleibt, die Länge des Strahlungsbündels sich allerdings vergrößern muß. Hohe Schneidgeschwindigkeiten, die für einen hohen Schneiddurchsatz einer Anlage notwendig sind, erfordern somit einen langen, schmalen Wärmestrahlungsfleck entlang der Schneidlinie. Typische Längen des Wärmestrahlungsbündels betragen 10 mm bis 50 mm bei einer Breite von 0,5 mm bis 2 mm, mit der Tendenz zu kleinen Breiten bei hoher Präzision.

Solange gerade Schnitte erfolgen, ist das Schneiden mit einem langgestreckten Wärmestrahlungsfleck insoweit ohne Probleme.

Bei bestimmten Anwendungen müssen allerdings auch Schnitte mit einer beliebig vorgegebenen Kontur erfolgen. Derartige Schnitte nennt man auch Freiformschnitte oder Konturschnitte.

Zur Anwendung kommen derartige Konturschnitte beispielsweise beim Schneiden von Kraftfahrzeugverglasungen für Scheiben und Rückspiegel sowie zur Einbringung größerer Bohrungen in flachen Glasscheiben.

Das Durchführen solcher Konturenschnitte bedarf besonderer Überlegungen.

Beim Kurvenschneiden muß sich nämlich das Wärmestrahlungsbündel der Bahn des gekrümmten Schnittes anpassen, damit eine maximale mechanische Spannung in dem zu schneidenden Glas entsteht und die Breite der Wärmeeinbringung schmal bleibt. Mit einem linearen Wärmestrahlungsbündel sind somit beim Kurvenschneiden mit einem langgestreckten Wärmestrahlungsbündel nur geringe Krümmungsradien der Schnitte möglich. Bei größeren Krümmungsradien der Kurven kann dann nur mit einer geringeren Länge des linearen Wärmestrahlungsbündels gearbeitet werden. Letzteres ermöglicht allerdings nur geringe Schneidgeschwindigkeiten.

In der bereits erwähnten WO 93/20015 bzw. WO 96/20062 ist eine Vorrichtung zur Formung eines langgestreckten Wärmestrahlungsflecks zum Schneiden von Glas beschrieben. In dieser Vorrichtung wird das Wärmestrahlungsbündel entsprechend der lokalen Form der Schneidkurve so gekrümmt, daß eine minimale Abweichung zur Schneidkurve besteht. Da diese Vorrichtung jedoch mit statischen optischen Elementen arbeitet, die eine nur eingeschränkte Variabilität des Wärmestrahlungsbündels erlauben, ist daher die bekannte Vorrichtung praktisch nur zum Schneiden von Kreisen prädestiniert, weil dabei mit einem konstanten Krümmungsradius geschnitten werden kann.

Sollen allerdings beispielsweise Zuschnitte von PKW-Verglasungen für Spiegel oder Scheiben mit hohen Geschwindigkeiten durchgeführt werden, so erfordert dies bei hohen Schneidgeschwindigkeiten eine Variation des Strahlprofils während des Schnittes, was mit der bekannten Vorrichtung nicht möglich ist.

Es besteht daher ein technisches Bedürfnis, bei dem beschriebenen Verfahren mit der in Fig. 5 dargestellten zugehörigen Vorrichtung zum Schneiden von flachen Werkstücken aus sprödem Material, insbesondere Glas, bei dem der schneidende Wärmestrahlungsfleck durch Scannen des Wärmestrahlungsbündels mittels bewegter optischer Elemente erzeugt wird, das Verfahren so zu führen bzw. die Vorrichtung so auszubilden, daß bei Kurvenschnitten ein der Kurvenform der zu schneidenden vorgegebenen Kontur angepasstes Wärmestrahlungsbündel erzeugbar ist.

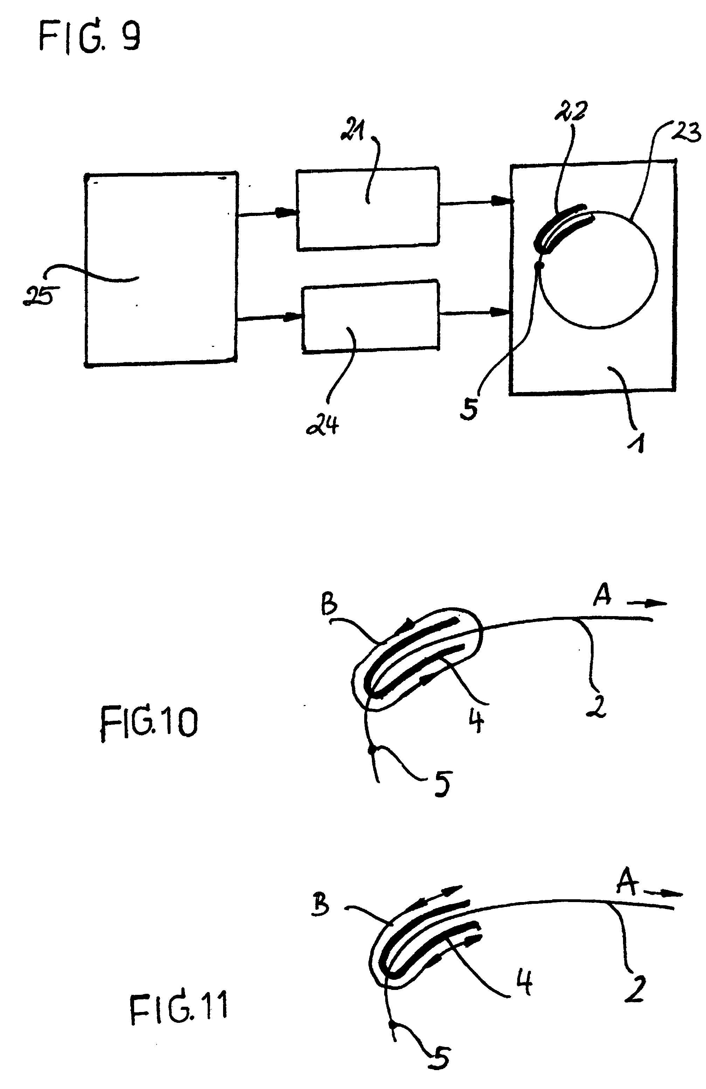

Zum Anpassen des Profils des gescannten Wärmestrahlungsbündels 7 bei Kurvenschnitten an die Kurvenform der Schneidlinie 2 dient die in Fig. 5 gezeigte Steuerung 11. Zur Erzeugung dieser Freiformschnitte kann das vorgegebene Wärmestrahlungsbündel 7 durch Veränderung der Oszillationsbedingungen der beiden senkrecht zueinander schwingenden Umlenkspiegel 8 und 9 mittels der Eingriffe der Steuerung 11 im Bereich von 360° gedreht werden, wobei zusätzlich noch die Krümmung des Wärmestrahlungsbündels der lokalen Krümmung des Schnittes angepasst wird, wie noch anhand der Fig. 9 erläutert wird. Es sind zur Erzeugung des Wärmestrahlungsbündels somit keine mechanischen Zusatzeinheiten entsprechend der lokalen Schneidposition und Kurvenkrümmung notwendig.

Zur Erzeugung der gekrümmten Wärmestrahlungsflecke sind die beiden Scannerbewegungen so miteinander synchronisiert, daß eine vorwiegend entlang der Schneidlinie 2 oszillierende Bewegung des Wärmestrahlungsbündels erzeugt wird. Dabei muß allerdings die Position der dem Schnitt nachfolgenden Kühlung 5 noch der lokalen Schneideposition angepasst werden, wofür zweckmäßig eine mechanische Dreheinrichtung an der Scanneroptik vorgesehen ist.

Die Fig. 9 zeigt in einer schematischen Blockschaltbild-Darstellung die Gesamtanordnung der Vorrichtung nach der Erfindung, einschließlich der zugehörigen Steuerungen. Der Block 21 kennzeichnet den Scannerblock einschließlich der Steuerung 11 nach Fig. 5 zur Erzeugung des gekrümmten Wärmestrahlungsfleckes 22 auf der hier kreisförmigen Schneidlinie 23 auf dem Werkstück 1 mit dem nachlaufenden Kühlpunkt 5. Die Stufe 24 bezeichnet eine Bahnsteuerung des Schneidvorganges mit einem bekannten Aufbau. Über die Steuerstufe 25 sind die Blöcke 21 und 24 steuerungstechnisch miteinander verkoppelt, so daß bei Freiformschnitten mit lokal veränderlichen Schneidradien lokal krümmungsabhängig vom Schnitt mit optimalen Wärmestrahlungsbündeln gearbeitet werden kann.

Die Fig. 5 ist ein bevorzugtes Ausführungsbeispiel der Erfindung. Allgemein kommt es darauf an, daß Scannervorrichtungen vorgesehen sind, die eine entsprechende zweidimensionale Variabilität in der Bewegung des Wärmestrahlungsbündels zulassen, d.h. das Wäremestrahlungsbündel muß zweidimensional auf dem Werkstück 1 geführt werden können und dabei durch steuerungstechnische Eingriffe eine Veränderung des erzeugten Wärmestrahlungsbündels erlauben.

Alternativ zu der zweidimensionalen Scannereinrichtung nach Fig. 6 mit zwei schwingenden Umlenkspiegeln 8,9 kann auch eine zweidimensionale Scannereinrichtung verwendet werden, innerhalb derer unabhängig von der Schneidrichtung 2 (23) eine der Scannerachsen 8 a, 9 a zur Oszillation entlang der Schneidrichtung 2 (23) verwendet wird, und der hierzu senkrechte Umlenkspiegel das V- oder U- oder ellipsenförmige Strahlprofil entsprechend der lokalen Krümmung der Schneidbahn anpaßt. Hierbei ist die Gesamtscannereinrichtung mechanisch um 360° frei drehbar. Insbesondere bei der Variante nach der noch zu erläuternden Fig. 11 weist diese Scannerachse die hierfür notwendige Dynamikreserve auf, da, bezogen auf die in Schneidrichtung arbeitende Scannerachse die Scannerfrequenz ohnehin nur halb so hoch ist. Zur Führung des den Scanner aufweisenden Schneidkopfes entlang der Schneidkurve 2 ist es dabei notwendig, den Scanner in einer drehbaren Lagerung aufzunehmen. Innerhalb dieser Halterung kann der Scanner dann mit der hieran fest verbundenen Kühlung 5 gedreht werden.

Durch die vorbeschriebene, die Erfindung weiterbildenden Maßnahmen ist beim Durchtrennen von flachen Werkstücken aus sprödbrüchigem Werkstoff, insbesondere Glas, eine besonders hohe Flexibilität zum Schneiden von beliebig vorgebenen Konturen, d.h. von Freiformen, mit hoher Schneidgeschwindigkeit möglich. Die Weiterbildung der Erfindung macht sich dabei die Eigenschaft einer Scannervorrichtung mit bewegten optischen Elementen, die eine besonders große Variabilität zur Strahlformung erlaubt, mit Vorteil zunutze, die somit eine flexible Anpassung des Wärmestrahlungsbündels mit einem langgestreckten Wärmestrahlungsfleck an die Schneidlinie und damit ein Schneiden von beliebigen Konturen mit hoher Schneidgeschwindigkeit erlaubt.

Mittels der beschriebenen Vorrichtungen lassen sich die unterschiedlichsten gekrümmten Wärmestrahlungsbündel bzw. Schneidflecke erzeugen, von denen in den Figuren 10 und 11 ein gekrümmtes U- oder V-förmiges Wärmestrahlungsbündel, dargestellt ist, wobei das Bündel auf unterschiedliche Art und Weise erzeugt wird.

In Fig. 10 wird das Strahlungsbündel bzw. der zugehörige Wärmestrahlungsfleck 4 dadurch erzeugt, daß das Wärmestrahlungsbündel eine geschlossene Kurvenbahn 1 auf der Oberfläche des Glases beschreibt. Dazu vollzieht das Wärmestrahlungsbündel vorwiegend entlang der Schneidlinie 2, unmittelbar benachbart zu dieser, eine oszillierende Bewegung. Überlagert wird dieser oszillierenden Bewegung in Schneidrichtung A eine Bewegung geringerer Auslenkung senkrecht zur Schneidlinie 2. Das Wärmestrahlungsbündel vollzieht daher zur Erzeugung des Wärmestrahlungsfleckes 4, wie dargestellt, eine geschlossene Kurvenbahn B, die die Schneidlinie 2 einhüllt. Je Umlauf der Kurvenbahn B wird jedoch die Leistung der Wärmestrahlungsquelle näherungsweise auf den Nullwert zurückgesteuert, wenn die vordere Scannerposition in Schneidrichtung A erreicht ist. Das U-oder V-förmige Strahlprofil wird somit durch eine Ansteuerung der Wärmestrahlungsquelle erzeugt. Bei gleichmäßig konstanter Ausgangsleistung dieser Quelle wäre das Strahlungsbündel elliptisch. Alternativ kann das U-oder V-förmige Strahlprofil auch erzeugt werden, indem ein elliptisches Strahlprofil azsgeblendet wird. Hierzu wird vorzugsweise eine strahlungsabsorbierende Blende oder dergleichen in den Strahlengang positioniert.

Anders als in Fig. 10 wird das gekrümmte U- bzw. V-förmige Wärmestrahlungsbündel gemäß Fig. 4 erzeugt, indem das Wärmestrahlungsbündel nicht in einer umlaufenden Bahn oszilliert, sondern abwechselnd auf beiden Seiten der Schneidlinie 2 über eine vorgegebene Länge mit einer Umkehrschleife am nachlaufenden Ausgangspunkt der Bahnkurve 4. Die Leistung der Wärmestrahlungsquelle muß zur Erzeugung eines derartigen Wärmestrahlungsfleckes mit der vorgegebenen Intensitätsverteilung nicht unbedingt gesteuert werden. Bei einem derartigen Scannerbetrieb ist allerdings die Scannerfrequenz entlang der Schneidlinie doppelt so groß wie senkrecht zur Schneidlinie, was sich durch das Abfahren des U- oder V-förmigen Profils ergibt.

## Patentansprüche

1. Verfahren zum Durchtrennen von flachen Werkstücken aus sprödem Material, insbesondere aus Glas, längs einer vorgegebenen Trennlinie, bei dem die Trennlinie mit einem zu ihr symmetrischen Wärmestrahlungsfleck, der eine erhöhte Strahlungsintensität in seinem Randbereich mit einem Temperaturmaximum an seinem hinteren Ende besitzt, erwärmt wird, wobei der Wärmestrahlungsfleck längs der Trennlinie und/oder das Werkstück bewegt wird, und bei dem der erwärmte Trennlinienabschnitt anschließend gekühlt wird,
**dadurch gekennzeichnet,**
**daß** ein Wärmestrahlungsfleck verwendet wird, dessen Randbereich mit erhöhter Strahlungsintensität auf einer V- oder U-förmigen Kurve liegt, die sich zum vorderen Ende des Wärmestrahlungsflecks öffnet, und bei dem das Temperaturmaximum örtlich im Scheitelpunkt der V- oder U-förmigen Kurve auf der Trennlinie unterhalb der Schmelztemperatur des Werkstückmaterials liegt.

2. Verfahren nach Anspruch 1, **dadurch gekennzeichnet, daß** ein Wärmestrahlungsfleck mit einer Breite von 0,5 bis 2 mm verwendet wird.

3. Verfahren nach Anspruch 1 oder 2, **dadurch gekennzeichnet, daß** ein Wärmestrahlungsfleck mit einer Länge von 10 bis 30 mm verwendet wird.

4. Verfahren nach einem der Ansprüche 1 bis 3, **dadurch gekennzeichnet, daß** ein Wärmestrahlungsfleck verwendet wird, dessen Randbereich mit erhöhter Strahlungsintensität auf einer parabelförmigen Kurve liegt.

5. Verfahren nach Ansprüche 1 bis 3, **dadurch gekennzeichnet, daß** die beiden Schenkel der V-förmigen Kurve über den Scheitelpunkt hinaus, vorzugsweise symmetrisch, verlängert sind.

6. Verfahren nach einem der Ansprüche 1 bis 5, **gekennzeichnet durch** ein Anpassen des Profils des Wärmestrahlungsbündels bei Kurvenschnitten an die Kurvenform der Schneidlinie.

7. Verfahren nach einem der Anprüche 1 bis 6, **gekennzeichnet durch** ein Führen des Wärmestrahlungsbündels in zwei Dimensionen ausgerichtet an der Schneidlinie der vorgegebenen Kontur **durch** Scannen unter Erzeugung eines langgestreckten Wärmestrahlungsfleckes entlang der Richtung der Schneidlinie.

8. Verfahren nach Anspruch 7, **dadurch gekennzeichnet, daß** der Wärmestrahlungsfleck durch Scannen eines Laserstrahls erzeugt wird.

9. Verfahren nach Anpruch 8, **dadurch gekennzeichnet, daß** das Scannen des Laserstrahls in Form einer Ellipse erfolgt, wobei der Laser zur Erzeugung einer V- oder U-förmigen Kurve abwechselnd ein- und ausgeschaltet oder der Strahl ein- und ausgeblendet wird.

10. Vorrichtung zum Durchtrennen von flachen Werkstücken aus sprödem Material, insbesondere aus Glas, längs einer vorgegebenen Trennlinie,
- mit einer optischen Einrichtung, die eine Wärmestrahlungsquelle (6), insbesondere einen Laser, und mindestens eine optische Komponente (8, 9) umfaßt, zur Erzeugung eines zur Trennlinie symmetrischen Wärmestrahlungsfleckes (3), der eine erhöhte Strahlungsintensität in seinem Randbereich mit einem Temperaturmaximum an seinem hinteren Ende besitzt,
- mit einer Einrichtung zum Bewegen des zu durchtrennenden Werkstücks und/oder des Wärmestrahlungsflecks längs der Trennlinie, und
- mit einer Kühleinrichtung (12) zum kühlen des bestrahlten Trennlinienabschnitts,
**dadurch gekennzeichnet,**
**daß** die optische Komponente und/oder die Wärmestrahlungsquelle zur Erzeugung eines Wärmestrahlungsflecks (3) ausgebildet ist, dessen Randbereich mit erhöhter Strahlungsintensität auf einer V- oder U-förmigen Kurve liegt, die sich zum vorderen Ende des Wärmestrahlungsflecks öffnet, und bei dem das Temperaturmaximum örtlich im Scheitelpunkt der V- oder U-förmigen Kurve auf der Trennlinie unterhalb der Schmelztemperatur des Werkstückmaterials liegt.

11. Vorrichtung nach Anspruch 10, **dadurch gekennzeichnet, daß** die optische Einrichtung zwei senkrecht zueinander angeordnete oszillierende, synchronisierte Spiegel (8, 9) aufweist, die einen Laserstrahl (7) auf die Oberfläche des Werkstücks (1) derart lenken, daß er dort die V- oder U-förmige Kurve (4) beschreibt.

12. Vorrichtung nach einem der Ansprüche 10 oder 11, **dadurch gekennzeichnet, daß** die Antriebseinrichtungen der beiden oszillierenden Spiegel (8, 9) an eine gemeinsame Steuer- und Regeleinrichtung (11) angeschlossen sind.

13. Vorrichtung nach einem der Ansprüche 11 oder 12, **dadurch gekennzeichnet, daß** die Oszillationsfrequenz der Spiegel (8, 9) bei 500 bis 2000 Hz liegt.

14. Vorrichtung nach Anspruch 10, **dadurch gekennzeichnet, daß** die optische Einrichtung ein Spiegelrad (14) aufweist, das eine derart gekrümmte Oberfläche (15) besitzt, daß ein reflektierter Laserstrahl (7) während einer Rotation mindestens einmal die U- oder V-förmige Kurve (4) auf dem Werkstück beschreibt.

15. Vorrichtung nach Anspruch 14, **dadurch gekennzeichnet, daß** die Rotationsfrequenz des Spiegelrades (14) bei 500 bis 3000 Hz liegt.

16. Vorrichtung nach einem der Ansprüche 10 bis 15, **dadurch gekennzeichnet, daß** die Intensität des Lasers (6) während jedes Durchlaufs der V- oder U-förmigen Kurve (4) veränderbar ist, so daß längs der Bahn beliebige Intensitatsverbindungen erzeugbar sind.

17. Vorrichtung nach Anspruch 10, **dadurch gekennzeichnet, daß** die optische Einrichtung strahlformende Optiken umfaßt.

18. Vorrichtung nach Anspruch 10, **dadurch gekennzeichnet, daß** die Wärmestrahlungsquelle ein Laser mit einem TEM 01*-Mode ist, und daß die optische Einrichtung eine Blende umfaßt, die einen Teil des Strahls derart ausblendet, daß die erhöhte Strahlungsintensität auf der Werkstückoberfläche die V- oder U-förmige Kurve (4) beschreibt.

19. Vorrichtung nach einem der Ansprüche 10 bis 18, **dadurch gekennzeichnet, daß** die Kühleinrichtung ein unterkühlter metallischer Tastkopf ist.

20. Vorrichtung nach einem der Ansprüche 10 bis 18, **dadurch gekennzeichnet, daß** die Kühleinrichtung eine Gasstrahleinrichtung, eine Flüssigkeitsinjektionseinrichtung oder eine Flüssigkeitszerstäubungseinrichtung ist.

21. Vorrichtung nach einem der Ansprüche 10 bis 20, **gekennzeichnet durch** Steuerungsmittel (21, 24, 25) zum Anpassen des Profils des Wärmestrahlungsbündels bei Kurvenschnitten an die Kurvenform der Schneidlinie (2).

22. Vorrichtung nach Anspruch 22 mit einer Bahnsteuerung (12) des Schneidvorganges, **dadurch gekennzeichnet, daß** die Steuerung (11, 21) der Oszillierbewegung der Umlenkspiegel (8, 9) mit der Bahnsteuerung (12) mittels einer übergeordneten Steuerstufe (25) gekoppelt ist.

23. Vorrichtung nach einem der Ansprüche 10 bis 22, **dadurch gekennzeichnet, daß** die Mittel zum Positionieren des dem Wärmestrahlungsfleck nachfolgenden Kühlspots (5) eine mechanische Dreheinrichtung aufweisen, die mit dem Scanner gekoppelt ist.

24. Vorrichtung nach Anspruch 22, **dadurch gekennzeichnet, daß** die Steuerung (11) der Oszillierbewegung so aufgebaut ist, daß einer der Umlenkspiegel (8,9) unabhängig von der Schneidrichtung in eine Oszillierbewegung entlang der Schneidrichtung (2) gesteuert ist und die Oszillierbewegung des hierzu senkrecht schwingenden Umlenkspiegels das Profil des Wärmestrahlungsbündels (7) entsprechend der lokalen Krümmung der zu schneidenden Kontur gesteuert ist, und daß die Spiegel (8,9) in einer drehbaren Lagerung aufgenommen sind.

25. Vorrichtung nach Anspruch 24, **dadurch gekennzeichnet, daß** die Mittel zum Positionieren des dem Wärmestrahlungsfleck nachfolgenden Kühlspots an der Lagerung angebracht sind.

## Claims

1. Method for cutting through flat workpieces made from brittle material, in particular from glass, along a predetermined parting line, in which the parting line is heated by a heat radiation spot which is symmetrical with respect to the parting line and has an increased radiation intensity in its edge region with a temperature maximum at its rear end, the heat radiation spot being moved along the parting line and/or the workpiece, and in which the heated parting-line section is then cooled, **characterized in that** a heat radiation spot, whose edge region with an increased radiation intensity lies on a V-shaped or U-shaped curve which opens out towards the front end of the heat radiation spot and in which the temperature maximum locally in the vertex of the V-shaped or U-shaped curve on the parting line is below the melting point of the workpiece material, is used.

2. Method according to Claim 1, **characterized in that** a heat radiation spot with a width of from 0.5 to 2 mm is used.

3. Method according to Claim 1 or 2, **characterized in that** a heat radiation spot with a length of 10 to 30 mm is used.

4. Method according to one of Claims 1 to 3, **characterized in that** a heat radiation spot, whose edge region with an increased radiation intensity lies on a parabolic curve, is used.

5. Method according to Claims 1 to 3, **characterized in that** the two limbs of the V-shaped curve are lengthened, preferably symmetrically, beyond the vertex.

6. Method according to one of Claims 1 to 5, **characterized by** matching the profile of the heat radiation beam, when cutting curves, to the curve shape of the cutting line.

7. Method according to one of Claims 1 to 6, **characterized by** the heat radiation beam being guided in two dimensions at the cutting line of the predetermined contour by scanning so as to generate an elongate heat radiation spot along the direction of the cutting line.

8. Method according to Claim 7, **characterized in that** the heat radiation spot is produced by scanning of a laser beam.

9. Method according to Claim 8, **characterized in that** the scanning of the laser beam takes place in the shape of an ellipse, in which case, in order to generate a V-shaped or U-shaped curve, the laser is alternately switched on and off or the beam is screened in and out.

10. Device for cutting through flat workpieces made from brittle material, in particular from glass, along a predetermined parting line,
- having an optical means, which comprises a heat radiation source (6), in particular a laser, and at least one optical component (8, 9), for generating a heat radiation spot (3), which is symmetrical with respect to the parting line and has an increased radiation intensity in its edge region with a temperature maximum at its rear end,
- having a means for moving the workpiece which is to be cut through and/or the heat radiation spot along the parting line, and
- having a cooling means (12) for cooling the irradiated parting-line section,
**characterized in that**
the optical component and/or the heat radiation source is designed to generate a heat radiation spot (3), of which the edge region with an increased radiation intensity lies on a V-shaped or U-shaped curve, which opens out towards the front end of the heat radiation spot, and in which the temperature maximum locally in the vertex of the V-shaped or U-shaped curve on the parting line is below the melting point of the workpiece material.

11. Device according to Claim 10, **characterized in that** the optical means has two oscillating, synchronized mirrors (8, 9) which are arranged perpendicular to one another and divert a laser beam (7) onto the surface of the workpiece (1) in such a manner that on the surface it describes the V-shaped or U-shaped curve (4).

12. Device according to one of Claims 10 or 11, **characterized in that,**
the drive means of the two oscillating mirrors (8, 9) are connected to a common control means (11).

13. Device according to one of Claims 11 or 12, **characterized in that** the oscillation frequency of the mirrors (8, 9) is 500 to 2000 Hz.

14. Device according to Claim 10, **characterized in that** the optical means has a mirror wheel (14) which has a surface (15) which is curved in such a manner that a reflected laser beam (7) describes the U-shaped or V-shaped curve (4) on the workpiece at least once during one rotation.

15. Device according to Claim 14, **characterized in that** the rotational frequency of the mirror wheel (14) is 500 to 3000 Hz.

16. Device according to one of Claims 10 to 15, **characterized in that** the intensity of the laser (6) can be varied during each pass through the V-shaped or U-shaped curve (4), so that any desired intensity combinations can be generated along the path.

17. Device according to Claim 10, **characterized in that** the optical means comprises beam-shaping lenses.

18. Device according to Claim 10, **characterized in that** the heat radiation source is a laser with a TEM 01* mode, and **in that** the optical means comprises a diaphragm which screens out part of the beam, in such a manner that the increased radiation intensity on the workpiece surface describes the V-shaped or U-shaped curve (4).

19. Device according to one of Claims 10 to 18, **characterized in that** the cooling means is a supercooled metallic sensing head.

20. Device according to one of Claims 10 to 18, **characterized in that** the cooling means is a gas-jet means, a liquid-injection means or a liquid-atomization means.

21. Device according to one of Claims 10 to 20, **characterized by** control features (21, 24; 25) for matching the profile of the heat radiation beam when cutting curves to the curve shape of the cutting line (2).

22. Device according to Claim 21 having a path control (12) for the cutting operation, **characterized in that** the control (11, 21) of the oscillating movement of the diverting mirrors (8, 9) is coupled to the path control (12) by means of a higher-level control stage (25).

23. Device according to one of Claims 10 to 22, **characterized in that** the features for positioning the cooling dot (5) which follows the heat radiation spot have a mechanical rotation means which is coupled to the scanner.

24. Device according to Claim 22, **characterized in that** the control (11) of the oscillating movement is constructed in such a way that one of the diverting mirrors (8, 9) is controlled so as to execute an oscillating movement along the cutting direction (2), independently of the cutting direction, and the oscillating movement of the diverting mirror which oscillates perpendicular to the first mirror controls the profile of the heat radiation beam (7) so as to match the local curvature of the contour which is to be cut, and **in that** the mirrors (8, 9) are accommodated in a rotatable bearing arrangement.

25. Device according to Claim 24, **characterized in that** the features for positioning the cooling dot which follows the heat radiation spot are arranged on the bearing arrangement.

## Revendications

1. Procédé pour la découpe de pièces planes en matériau fragile, en particulier en verre, le long d'une ligne de découpe prédéterminée, dans lequel la ligne de découpe est chauffée par une tache de rayonnement thermique qui est symétrique par rapport à elle et qui possède une intensité de rayonnement plus élevée dans sa zone de bordure avec un maximum de température à son extrémité arrière, la tache de rayonnement thermique et/ou la pièce étant déplacées le long de la ligne de découpe, le tronçon chauffé de la ligne de découpe étant ensuite refroidi,
**caractérisé en ce que** l'on utilise une tache de rayonnement thermique dont la zone de bordure à intensité de rayonnement plus élevée est située sur une courbe en forme de V ou de U qui s'ouvre vers l'extrémité avant de la tache de rayonnement thermique, le maximum de température étant situé localement au sommet de la courbe en forme de V ou de U, sur la ligne de découpe, et étant inférieur à la température de fusion du matériau de la pièce.

2. Procédé selon la revendication 1, **caractérisé en ce que** l'on utilise une tache de rayonnement thermique d'une largeur de 0,5 à 2 mm.

3. Procédé selon la revendication 1 ou 2, **caractérisé en ce que** l'on utilise une tache de rayonnement thermique d'une longueur de 10 à 30 mm.

4. Procédé selon l'une des revendications 1 à 3, **caractérisé en ce que** l'on utilise une tache de rayonnement thermique dont la région du bord à intensité de rayonnement plus élevée est située sur une courbe en forme de parabole.

5. Procédé selon les revendications 1 à 3, **caractérisé en ce que** les deux branches de la courbe en forme de V sont prolongées de préférence symétriquement au-delà du sommet.

6. Procédé selon l'une des revendications 1 à 5, caractérisé, dans le cas de découpes courbes, par une adaptation du profil du faisceau de rayonnement thermique à la forme de la courbe de la ligne de découpe.

7. Procédé selon l'une des revendications 1 à 6, **caractérisé par** un guidage du faisceau de rayonnement thermique aligné suivant deux dimensions sur la ligne de découpe du contour prédéterminé par balayage avec création d'une tache allongée de rayonnement thermique dans la direction de la ligne de découpe.

8. Procédé selon la revendication 7, **caractérisé en ce que** la tache de rayonnement thermique est créée par balayage d'un rayon laser.

9. Procédé selon la revendication 8, **caractérisé en ce que** le balayage du rayon laser s'effectue en forme d'ellipse, le laser étant alternativement branché et débranché ou le rayon étant alternativement masqué et démasqué pour créer une courbe en forme de V ou de U.

10. Dispositif pour la découpe de pièces planes en matériau fragile, en particulier en verre, le long d'une ligne de découpe prédéterminée,
- avec un dispositif optique qui possède une source (6) de rayonnement thermique (6), en particulier un laser, et au moins un composant optique (8, 9) pour la création d'une tache (3) de rayonnement thermique symétrique par rapport à la ligne de découpe et qui possède dans sa région de bordure une intensité de rayonnement plus élevée avec un maximum de température à son extrémité arrière,
- avec un dispositif pour le déplacement de la pièce à découper et/ou de la tache de rayonnement thermique le long de la ligne de découpe, et
- avec un dispositif de refroidissement (12) pour le refroidissement du tronçon irradié de la ligne de découpe,
**caractérisé en ce que**
le composant optique et/ou la source de rayonnement thermique sont configurés pour la création d'une tache (3) de rayonnement thermique dont la zone de bordure avec intensité de rayonnement plus élevée est située sur une courbe en forme de V ou de U qui s'ouvre vers l'extrémité avant de la tache de rayonnement thermique et dans lequel le maximum de température est situé localement au sommet de la courbe en forme de V ou de U, sur la ligne de découpe, et est inférieur à la température de fusion du matériau de la pièce.

11. Dispositif selon la revendication 10, **caractérisé en ce que** le dispositif optique présente deux miroirs (8, 9), disposés perpendiculairement l'un à l'autre, oscillants et synchronisés, qui dévient un rayon laser (7) sur la surface de la pièce (1) de manière à ce qu'il y décrive une courbe (4) en forme de V ou de U.

12. Dispositif selon l'une des revendications 10 ou 11, **caractérisé en ce que** les dispositifs d'entraînement des deux miroirs oscillants (8, 9) sont raccordés à un dispositif commun (11) de commande et de régulation.

13. Dispositif selon l'une des revendications 11 ou 12, **caractérisé en ce que** la fréquence d'oscillation des miroirs (8, 9) est comprise entre 500 et 2 000 Hz.

14. Dispositif selon la revendication 10, **caractérisé en ce que** le dispositif optique présente une roue réfléchissante (14) qui possède une surface (15) courbée de telle sorte qu'un rayon laser (7) réfléchi pendant un tour décrive au moins une fois la courbe (4) en forme de U ou de V sur la pièce.

15. Dispositif selon la revendication 14, **caractérisé en ce que** la fréquence de rotation de la roue réfléchissante (14) est comprise entre 500 et 3 000 Hz.

16. Dispositif selon l'une des revendications 10 à 15, **caractérisé en ce que** l'intensité du laser (6) peut être modifiée pendant chaque passage sur la courbe (4) en forme de V ou de U de manière à pouvoir créer des conditions quelconques d'intensité le long du parcours.

17. Dispositif selon la revendication 10, **caractérisé en ce que** le dispositif optique comprend des optiques de formation de rayon.

18. Dispositif selon la revendication 10, **caractérisé en ce que** la source de rayonnement thermique est un laser en mode TEM 01* et **en ce que** le dispositif optique comprend un écran qui écarte une partie du rayon de telle sorte que le rayonnement d'intensité plus élevée décrive sur la surface de la pièce la courbe (4) en forme de V ou de U.

19. Dispositif selon l'une des revendications 10 à 18, **caractérisé en ce que** le dispositif de refroidissement est une tête métallique palpeuse refroidie.

20. Dispositif selon l'une des revendications 10 à 18, **caractérisé en ce que** le dispositif de refroidissement est un dispositif à jet de gaz, un dispositif d'injection de liquide ou un dispositif de pulvérisation de liquide.

21. Dispositif selon l'une des revendications 10 à 20, caractérisé, dans le cas de découpes courbes, par des moyens de commande (21, 24, 25) pour l'adaptation du profil du faisceau de rayonnement thermique à la forme de la courbe de la ligne de découpe (2).

22. Dispositif selon la revendication 22, avec une commande (12) de parcours de l'opération de découpe, **caractérisé en ce que** la commande (11, 21) du déplacement d'oscillation des miroirs de déviation (8, 9) est couplée à la commande de parcours (12) au moyen d'un étage de commande prioritaire (25).

23. Dispositif selon l'une des revendications 10 à 22, **caractérisé en ce que** les moyens de positionnement de la tache de refroidissement (5) qui suit la tache de rayonnement thermique présentent un dispositif mécanique de rotation qui est couplé au scanner.

24. Dispositif selon la revendication 22, **caractérisé en ce que** la commande (11) du déplacement d'oscillation présente une structure telle que l'un des miroirs de déviation (8, 9) est commandé indépendamment de la direction de découpe dans un déplacement d'oscillation le long de la direction de découpe (2), le déplacement d'oscillation du miroir de déviation qui oscille perpendiculairement au premier commandant le profil du faisceau (7) de rayonnement thermique en correspondance à la courbure locale du contour à découper et **en ce que** les miroirs (8, 9) sont reçus dans un palier rotatif.

25. Dispositif selon la revendication 4, **caractérisé en ce que** les moyens de positionnement de la tache de refroidissement qui suit la tache de rayonnement thermique sont installés sur le palier.
